# EUROPÄISCHE PATENTSCHRIFT

(11) **EP 1 756 680 B1**
(45) Veröffentlichungstag und Bekanntmachung des Hinweises auf die Patenterteilung: **28.08.2013**
(21) Anmeldenummer: 05756920.4
(22) Anmeldetag: 15.06.2005
(51) Int. Cl.: G05B 19/05, G05B 9/02

(54) **VERFAHREN ZUM BETRIEB EINER RECHENEINHEIT SOWIE SIGNAL ZUR VERARBEITUNG IN EINER RECHENEINHEIT**
METHOD FOR OPERATING A CALCULATING UNIT AND SIGNAL FOR PROCESSING IN A CALCULATING UNIT
PROCEDE POUR FAIRE FONCTIONNER UNE UNITE DE CALCUL ET SIGNAL DE TRAITEMENT DANS UNE UNITE DE CALCUL

(30) Priorität: 18.06.2004 EP 04014407
(43) Veröffentlichungstag der Anmeldung: 28.02.2007
(73) Patentinhaber: Siemens Aktiengesellschaft, 80333 München (DE)
(72) Erfinder: SCHLARB, Eberhard, 76229 Karlsruhe (DE)
(86) Internationale Anmeldenummer: PCT/EP2005/052763
(87) Internationale Veröffentlichungsnummer: WO 2005/124478

(56) Entgegenhaltungen:
- US-A- 4 355 358
- US-A- 4 641 517
- WETTERLIND P ET AL: "ENSURING SOFTWARE SAFETY IN ROBOT CONTROL" 25. Oktober 1987 (1987-10-25), EXPLORING TECHNOLOGY - TODAY AND TOMORROW. DALLAS, OCT. 25 - 29, 1987, PROCEEDINGS OF THE FALL JOINT COMPUTER CONFERENCE. (FJCC), WASHINGTON, IEEE COMPUTER SOC. PRESS, US, PAGE(S) 34-37 , XP000012656 Seite 36
- BUKOWSKI J V ET AL: "Using Markov models for safety analysis of programmable electronic systems" Juni 1995 (1995-06), ISA TRANSACTIONS, INSTRUMENT SOCIETY OF AMERICA. PITTSBURGH, US, PAGE(S) 193-198 , XP004020110 ISSN: 0019-0578 das ganze Dokument

## Beschreibung

Die Erfindung betrifft ein Verfahren zum Betrieb einer Recheneinheit und ein Signal zur Verarbeitung in einer Recheneinheit.

Dabei wird von der Recheneinheit ein Softwareprogramm abgearbeitet, welches Eingangssignale verarbeitet und daraus Ausgangssignale erzeugt. Das Softwareprogramm kann dabei auch zusammenwirkende Softwaremodule innerhalb eines komplexeren Softwareprogramms betreffen, wobei die Softwaremodule jeweils Eingangssignale verarbeiten und Ausgangssignale - welche gegebenenfalls als Eingangssignale nachgeschalteter Softwaremodule verwendet werden - generieren.

Im Bereich der Automatisierungstechnik werden beispielsweise sogenannte speicherprogrammierbare Steuerungen oder eine Emulation dieser Steuerungen mittels PC-Technik verwendet, um Steuerungsprogramme für eine technische Anlage auszuführen. Diese Steuerungsprogramme umfassen in der Regel eine Anzahl an Softwaremodulen, beispielsweise zur Realisierung bestimmter Steuerungsaufgaben mittels einer Regelung, wobei die Softwaremodule meist wiederum aufgeteilt sind in weitere Softwaremodule wie beispielsweise Organisationsbausteine, Funktionsbausteine, Datenbausteine oder Schrittbausteine.

Der im folgenden verwendete Begriff "Softwareprogramm" soll daher sowohl ein vollständiges Softwareprogramm als Ganzes als auch individuelle Softwaremodule eines komplexeren Softwareprogramms als auch weitere Softwaremodule gegebenenfalls als Teil eines Softwaremoduls (wie beispielsweise die vorhergenannten Bausteine) umfassen.

Somit sind Eingangssignale im Sinne der vorliegenden Erfindung sowohl solche Signale, welche infolge von direkten Messungen mittels Sensoren anfallen und an das Softwareprogramm übermittelt werden als auch solche Signale, welche von einem Softwareprogramm im obigen Sinne als Ausgangssignal erzeugt werden und als Eingangssignal einem nachgeschalteten Softwareprogramm als dessen Eingangssignal oder Eingangssignale übergeben und weiterverarbeitet werden.

Eine Signalquelle kann daher sowohl ein Sensor sein, welcher ursprünglich anfallende Signale erfasst, aber auch ein Zwischenergebnis einer Signalverarbeitung, welches beispielsweise von einem Softwareprogramm und/oder Softwaremodul und/oder weiteren Softwaremodul ermittelt und an ein weiteres Softwareprogramm und/oder Softwaremodul und/oder weiteres Softwaremodul übermittelt wird.

Beim Anfall von Signalen in einer Signalquelle kann z.B. infolge einer Störung der Signalquelle das erzeugte Signal falsch, schlecht (z.B. verrauscht) oder zeitweise nicht verfügbar sein. Z.B. kann infolge eines Drahtbruchs bei einem Sensor das von dem Sensor erfasste Signal nicht oder nur zeitweise weitergegeben werden oder bei einer Signalverarbeitung in einem Softwareprogramm und/oder Softwaremodul und/oder weiteren Softwaremodul wird in einem Rechenalgorithmus eine Division von Null durchgeführt.

Um derartige gestörte Signale erkennen zu können, ist es bekannt, dem Signal eine Kennzeichnung beizugeben (z.B. einen sogenannten Qualitycode), welcher auf die Qualität des Signals hinweist. Ein Qualitycode "BAD" hieße dann, dass bei einer Weiterverarbeitung eines derartigen Signals durch in Signalrichtung nachgelagerte Softwareprogramme eine Berücksichtigung derartiger Fehler möglich ist, in dem beispielsweise eine Warnmeldung erzeugbar ist, welche auf das schlechte Signal hinweist oder sogar die Weiterverarbeitung unterbunden wird.

Es ist weiterhin bekannt, dass die Kennzeichnung eines schlechten Signals dominant vererbt wird, dass also solche Softwareprogramme, welche ein schlechtes Signal verarbeiten, ihre jeweiligen Ausgangssignale ebenfalls als schlecht kennzeichnen.

Werden nun derartige schlechte Signale in Art einer Rückkopplungsschleife als Eingangssignale auf Softwareprogramme und/oder Softwaremodule und/oder weitere Softwaremodule zurückgeführt, so bleibt infolge der dominant vererbten Kennzeichnung "BAD" jedes der Ausgangssignale, welche von der Rückkopplungsschleife umfasst sind, im Status "BAD", obwohl in der Zwischenzeit die Störung der Signalquelle behoben sein kann.

Der Erfindung liegt daher die Aufgabe zugrunde, ein verbessertes Verfahren zum Betrieb einer Recheneinheit sowie ein verbessertes Signal zur Verarbeitung in einer Recheneinheit anzugeben, mittels welcher insbesondere die genannten Nachteile überwunden werden.

Bezüglich des Verfahrens wird die Aufgabe erfindungsgemäß gelöst durch ein Verfahren zum Betrieb einer Recheneinheit, mittels welcher ein Softwareprogramm abgearbeitet wird,
- wobei das Softwareprogramm die Verarbeitung von Eingangs- und die Erzeugung von Ausgangssignalen umfasst,
- wobei mindestens ein Teil der Ausgangssignale rückgekoppelt und dadurch als mindestens ein Eingangssignal für das Softwareprogramm verwendet wird,
- wobei mindestens ein weiterer Teil der genannten Signale eine Kennzeichnung aufweist, welche mit der Qualität der entsprechenden Signale korreliert ist,
- wobei die Kennzeichnung bei einer Weiterverarbeitung der entsprechenden Signale an mindestens eines der bei der Weiterverarbeitung erzeugten Ausgangssignale vererbt wird, und wobei mindestens der weitere Teil der Signale weiterhin jeweils mindestens ein Attribut aufweist, welches mit einer aktuellen Vererbungshäufigkeit der Kennzeichnung korreliert ist.

Die Erfindung geht dabei von der Überlegung aus, dass bei einem bekannten Verfahren zum Betrieb einer Recheneinheit, bei welchem die Vererbung einer Kennzeichnung an ein Folgesignal stattfindet, in den Fällen, in welchen die Kennzeichnung dominant vererbt wird - also bei der Weiterverarbeitung erhalten bleibt - fälschlicherweise als "schlecht" gekennzeichnete Signale weiterverarbeitet werden, obwohl die ursprüngliche Ursache, welche die Kennzeichnung "schlecht" gesetzt hat, mittlerweile nicht mehr vorhanden ist.

Dieses Problem tritt insbesondere in sogenannten Rückkopplungsschleifen auf, in welchen Ausgangssignale und/oder Zwischensignale zurückgeführt werden auf die Eingänge von in Signalrichtung weiter vorne liegenden Softwareprogrammen und/oder Softwaremodulen.

Beispielsweise kann eine Signalquelle oder eine Verarbeitungsfunktion ein als "schlecht" gekennzeichnetes Signal erzeugen (beispielsweise verursacht durch den Bruch eines Drahtes bei einem Geber oder bei einer mathematischen Division durch Null bei einem Algorithmus). Das Kennzeichen "schlecht" wird dabei dem Signal beigefügt. Wenn nun ein derartiges Signal von Softwareprogrammen und/oder Softwaremodulen weiterverarbeitet wird, welche diese Kennzeichnung dominant weitervererben, und wird mindestens ein dabei ermitteltes Verarbeitungsergebnis wieder als Eingangsgröße für ein vorgelagertes Softwareprogramm und/oder Softwaremodul verwendet, so ist eine Rückkopplungsschleife gebildet, in welcher dieses dominant vererbte Attribut "schlecht" unerwünscht erhalten bleibt.

Beim erfindungsgemäßen Verfahren ist daher das Attribut vorgesehen, welches einen Hinweis darauf gibt, wie häufig die Kennzeichnung bei der Signalverarbeitung bereits weiter vererbt wurde.

Vorteilhaft wird ein aktueller Wert des Attributs mit einem vorgegebenen Häufigkeitsgrenzwert verglichen.

Beispielsweise kann in Form eines Häufigkeitsgrenzwertes von z.B. 5 festgelegt werden, dass eine Kennzeichnung "schlecht" höchstens 5 mal weitervererbt wird und anschließend zurückgesetzt wird auf den Wert "gut". Dadurch kann die sogenannte Vererbungstiefe dominant vererbter Kennzeichnungen begrenzt werden, was zum automatischen Entfernen einer Kennzeichnung "schlecht" aus einer Rückkopplungsschleife führt. Dadurch verschwindet eine derartige Kennzeichnung nach einer festgelegten Anzahl an Bearbeitungszyklen automatisch.

In sehr vielen praktisch vorkommenden Fällen ist es so, dass ein fehlerhaftes Signal nicht dauerhaft vorliegt, sondern nach einer bestimmten Anzahl an Bearbeitungszyklen wieder korrekt ist, wenn beispielsweise ein Algorithmus zu keiner weiteren Division durch Null führt oder der Drahtbruch eines Gebers in irgendeiner Form behoben wurde.

Jedes Softwareprogramm und/oder Softwaremodul, welches eine dominante Kennzeichnung eines Signals weiterverarbeitet, erhöht den Wert des Attributs beispielsweise um Eins. Wenn dann von einem Softwareprogramm und/oder Softwaremodul mehrere Signale verarbeitet werden, welche jeweils eine dominant vererbte Kennzeichnung aufweisen, so ist für die Bildung der Kennzeichnung eines Verarbeitungsergebnisses dieses Softwareprogramms und/oder Softwaremoduls dasjenige Eingangssignal relevant, dessen Kennzeichnung die geringere Vererbungstiefe aufweist.

Erreicht nun bei der Signalverarbeitung die Vererbungstiefe der dominant vererbten Kennzeichnung den Häufigkeitsgrenzwert, so wird vom aktuell verarbeitenden Softwareprogramm und/oder Softwaremodul anstatt der dominanten Kennzeichnung "schlecht" die nicht dominante Kennzeichnung "gut" gesetzt. Dadurch wird eine in der Regel unerwünschte Weitervererbung dominanter Signalkennzeichnungen bei Signalrückführungsschleifen automatisch nach einer festlegbaren Anzahl an Verarbeitungszyklen unterbunden.

Bei einer besonders bevorzugten Ausführungsform der Erfindung wird daher durch eine Überschreitung des Häufigkeitsgrenzwertes eine Veränderung eines aktuellen Werts der Kennzeichnung angestoßen.

Die Erfindung führt weiterhin zu einem Signal mit einer bei dessen Verarbeitung in einer Recheneinheit vererbbaren Kennzeichnung, die mit der Qualität des Signals korreliert ist, wobei ein Attribut, welches mit einer aktuellen Vererbungshäufigkeit der Kennzeichnung korreliert ist, vom Signal umfasst ist.

Im folgenden wird ein Ausführungsbeispiel der Erfindung näher dargestellt. Es zeigt:
FIG eine Signalverarbeitungs-Rückführungsschleife zur Veranschaulichung des erfindungsgemäßen Verfahrens.

In der FIG ist eine Recheneinheit 1 dargestellt, welche ein Softwareprogramm 3 verarbeitet. Das Softwareprogramm 3 umfasst dabei softwaretechnisch verschaltete Softwaremodule 31, 32, 33.

Eine Signalquelle 10, beispielsweise ein Geber, erzeugt ein Eingangssignal 5, welches vom Softwaremodul 31 zu einem Ausgangssignal 7 verarbeitet wird. Dieses Ausgangssignal 7 wird zur Weiterverarbeitung einem in Signalflussrichtung nachgeschalteten Softwaremodul 32 weiterverarbeitet, welches wiederum ein weiteres Ausgangssignal 7 erzeugt und dieses als Eingangssignal an das Softwaremodul 33 übermittelt.

Das Ausgangssignal 7 des Softwaremoduls 33 wird zurückgeführt zum Softwaremodul 31 und dort als Eingangssignal 5 weiterverarbeitet. Im vorliegenden Ausführungsbeispiel liegt also eine datentechnische Rückkopplungsschleife auf das Softwaremodul 31 vor.

Erfindungsgemäß weisen die Signale 5, 7 eine Kennzeichnung 15 sowie ein Attribut 20 auf.

Die Kennzeichnung 15 ist dabei ein Maß für die Qualität des Signals und gibt beispielsweise an, ob das Signal verlässlich ist oder aus einer gestörten Signalquelle stammt.

Das Attribut 20 ist mit einer aktuellen Vererbungshäufigkeit der Kennzeichnung korreliert und dessen aktueller Wert gibt an, wie oft infolge einer zwar erfolgten Weiterverarbeitung die Kennzeichnung 15 bereits vererbt wurde.

Von einer dominanten Vererbung spricht man dann, wenn die Kennzeichnung 15 bei einer Weiterverarbeitung durch ein in Signalflussrichtung nachgeschaltetes Softwaremodul 31, 32, 33 nicht verändert werden kann. Beispielsweise kann ein als "schlecht" gekennzeichnetes Eingangssignal 5, welches aus einer schadhaften Signalquelle 10 stammt, nicht plötzlich durch eine bloße Weiterverarbeitung dieses Signals "gut" werden, da das jeweilige Weiterverarbeitungsergebnis dieses Signals auf dem schlechten Signal aufsetzen muss und daher auch das Weiterverarbeitungsergebnis "schlecht" wird.

Es sei nun der Fall angenommen, dass die Signalquelle 10 gestört ist und somit ein schlechtes Eingangssignal 5 liefert. Die Kennzeichnung 15 dieses Signals lautet somit "schlecht" und das entsprechende Attribut 20, welches dem Signal der Signalquelle 10 zugeordnet ist, erhält den Wert Null.

Das schlechte Eingangssignal 5 wird nun im Softwaremodul 31 zum Ausgangssignal 7 weiterverarbeitet, wobei dieses Ausgangssignal ebenfalls die Kennzeichnung "schlecht" aufweist, das entsprechende Attribut 20 aber erhält den Wert Eins.

Das genannte Ausgangssignal 7 wird im folgenden vom Softwaremodul 32 weiterverarbeitet, welches wiederum ein Ausgangssignal erzeugt, dass die Kennzeichnung "schlecht" erhält und einen aktuellen Wert für das Attribut 20 gleich Zwei aufweist. Schließlich bleibt der Wert der Kennzeichnung 15 des Verarbeitungsergebnisses des Softwaremoduls 33 gleich "schlecht" und das Attribut 20 wird zu Drei.

Es sei nun angenommen, dass spätestens zu diesem Zeitpunkt, oder auch früher, die Signalquelle 10 nicht mehr gestört ist und somit das Eingangssignal 5, welches von der Signalquelle 10 zum ersten Softwaremodul 31 geführt ist, verlässlich ist.

Hat man nun einen Häufigkeitsgrenzwert von Drei festgelegt, so kann nun bei der Weiterverarbeitung des vom Softwaremodul 33 auf das Softwaremodul 31 rückgekoppelten Signals dessen Kennzeichnung 15 zurückgesetzt werden auf "gut", so dass alle in der Folge entstehenden Weiterverarbeitungsergebnisse ebenfalls als "gut" gekennzeichnet werden.

So wird verhindert, dass eine Kennzeichnung "schlecht" in einer Endlosschleife geführt wird, obwohl die ursprünglich auslösende Ursache nicht mehr vorhanden ist.

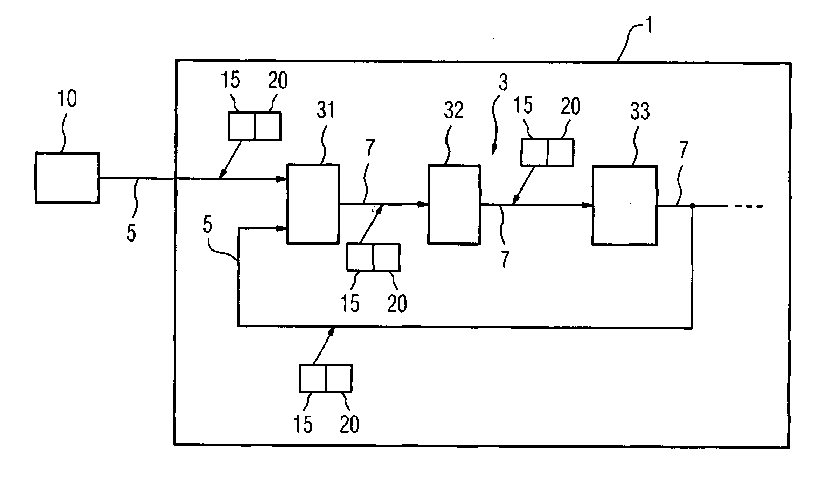

## Patentansprüche

1. Verfahren zum Betrieb einer Recheneinheit (1), mittels welcher ein Softwareprogramm (3) abgearbeitet wird,
- wobei das Softwareprogramm (3) die Verarbeitung von Eingangs- (5) und die Erzeugung von Ausgangssignalen (7) umfasst,
- wobei mindestens ein Teil der Ausgangssignale (7) rückgekoppelt und dadurch als mindestens ein Eingangssignal (5) für das Softwareprogramm (3) verwendet wird, wobei mindestens ein weiterer Teil der genannten Signale (5,7) eine Kennzeichnung (15) aufweist, welche mit der Qualität der entsprechenden Signale (5,7) derart korreliert ist, dass die Kennzeichnung (15) entweder eine dominante oder eine nicht-dominante Kennzeichnung (15) ist, und
- wobei die dominante Kennzeichnung (15) bei einer Weiterverarbeitung der entsprechenden Signale (5,7) an mindestens eines der bei der Weiterverarbeitung erzeugten Ausgangssignale (7) vererbt wird,
**dadurch gekennzeichnet, dass** der mindestens eine weitere Teil der Signale (5,7) weiterhin jeweils mindestens ein Attribut (20) aufweist, welches mit einer aktuellen Vererbungshäufigkeit der dominanten Kennzeichnung (15) korreliert ist, wobei ein aktueller Wert des Attributs (20) mit einem vorgegebenen Häufigkeitsgrenzwert verglichen wird und bei einer Überschreitung des Häufigkeitsgrenzwerts anstatt der dominanten Kennzeichnung (15) die nicht-dominante Kennzeichnung (15) gesetzt wird.

2. Verwendung eines Signal (5,7) für ein Verfahren nach Anspruch 1, mit einer bei dessen Verarbeitung in einer Recheneinheit vererbbaren Kennzeichnung (15), die mit der Qualität des Signals (5,7) derart korreliert ist, dass die Kennzeichnung (15) entweder eine dominante oder eine nicht-dominante Kennzeichnung (15) ist,
**dadurch gekennzeichnet, dass** das Signal (5, 7) ferner ein Attribut (20) aufweist, welches mit einer aktuellen Vererbungshäufigkeit der dominanten Kennzeichnung (15) korreliert ist.

## Claims

1. Method for operating a calculating unit (1) by means of which a software program (3) is executed,
- with the software program (3) comprising the processing of input signals (5) and the generation of output signals (7),
- with at least a part of the output signals (7) being fed back and thereby being used as at least one input signal (5) for the software program (3),
- with at least one further part of said signals (5, 7) having a marking (15) which is correlated with the quality of the corresponding signals (5, 7), so that the marking is either a dominant or non-dominant marking (15), and
- with the dominant marking (15) being passed on in further processing of the corresponding signals (5, 7) to at least one of the output signals (7) generated in the further processing,
**characterised in that** the at least one further part of the signals (5, 7) also has at least one attribute (20) in each case which is correlated with a current inheritance frequency of the dominant marking (15), with a current value of the attribute (20) being compared with a predetermined frequency limit value and, if the frequency limit value is exceeded, instead of the dominant marking (15), the non-dominant marking (15) being set.

2. Use of a signal (5, 7) for a method according to claim 1, with a marking (15) able to be passed on in a calculating unit during its processing, which is correlated with the quality of the signal (5, 7) such that the marking (15) is either a dominant or a non-dominant marking (15),
**characterised in that** the signal (5, 7) also features an attribute (20), which is correlated with a current inheritance frequency of the dominant marking (15).

## Revendications

1. Procédé pour faire fonctionner une unité ( 1 ) de calcul au moyen de laquelle un programme ( 3 ) de logiciel se déroule,
- dans lequel le programme ( 3 ) de logiciel comprend le traitement de signaux ( 7 ) d'entrée et la production de signaux ( 7 ) de sortie,
- dans lequel au moins une partie des signaux ( 7 ) de sortie est réinjectée et est utilisée ainsi comme au moins un signal ( 5 ) d'entée pour le programme ( 3 ) de logiciel,
- dans lequel au moins une autre partie des signaux ( 5,7 ) mentionnés a une caractérisation ( 15 ) qui est en corrélation avec la qualité des signaux ( 5,7 ) correspondants, de manière à ce que la caractérisation ( 15 ) soit une caractérisation dominante ou une caractérisation ( 15 ) non dominante et
- dans lequel la caractérisation ( 15 ) dominante est transmise, lors d'un traitement ultérieur des signaux ( 5,7 ) correspondants, à au moins l'un des signaux ( 7 ) de sortie produits lors du traitement ultérieur,
**caractérisé en ce que** la au moins une autre partie des signaux ( 5,7 ) a, en outre respectivement, au moins un attribut ( 20 ) qui est en corrélation avec une fréquence présente de transmission de la caractérisation ( 15 ) dominante, une valeur présente de l'attribut ( 20 ) étant comparée à une valeur limite de fréquence prescrite et, si la valeur limite de fréquence est dépassée, la caractérisation ( 15 ) non dominante est mise au lieu de la caractérisation ( 15 ) dominante.

2. Utilisation d'un signal ( 5,7 ) pour un procédé suivant la revendication 1, comprenant une caractérisation ( 15 ), qui, lors du traitement du signal, peut être transmise dans une unité de calcul et qui est en corrélation avec la qualité du signal ( 5,7 ) de manière à ce que la caractérisation ( 15 ) soit une caractérisation ( 15 ) dominante ou une caractérisation ( 15 ) non dominante,
**caractérisé en ce que** le signal ( 5,7 ) a, en outre, un attribut ( 20 ) qui est en corrélation avec une fréquence de transmission présente de la caractérisation ( 15 ) dominante.
